# EUROPEAN PATENT SPECIFICATION

(11) **EP 1 368 256 B1**
(45) Date of publication and mention of the grant of the patent: **19.08.2009**
(21) Application number: 02721311.5
(22) Date of filing: 05.03.2002
(51) Int. Cl.: B65D 85/00

(54) **CARRYING CASE FOR A LAPTOP COMPUTER**
TRAGETASCHE FÜR LAPTOP
MALLETTE DE TRANSPORT POUR UN ORDINATEUR PORTABLE

(30) Priority: 06.03.2001 US 273785 P
(43) Date of publication of application: 10.12.2003
(73) Proprietor: SAMSONITE CORPORATION, Denver, Colorado 80239 (US)
(72) Inventor: DOMOTOR, Agnes, Csilla, Jamaica Plain, MA 02130 (US)
(74) Representative: Domenego, Bertrand
(86) International application number: PCT/US2002/007097
(87) International publication number: WO 2002/070373

(56) References cited:
- WO-A-96/01447
- DE-U1- 29 812 404
- US-A- 5 217 119
- US-A- 5 808 865
- US-A- 6 026 961

## Description

### Background of the Invention

This invention relates to cases, usually made from panels of soft textile material or leather, used to transport laptop computers. More particularly, the invention relates to such cases that permit the user to both transport the laptop computer in the case as well as operate the laptop computer while the laptop computer is substantially contained in the case. For example, this type of carrying case opens up and unfolds adequately to perm it the user to access the keyboard and to view the display screen of the laptop computer while the computer is resting at least partially within a compartment of the carrying case. One such type of computer case is shown in German Utility Model DE 29812404 U; another is shown in published U.K. patent applicati on no. GB2333033 assigned to Samsonite Corporation. In the laptop computer case construction disclosed in this patent, the laptop computer is intended to be strapped to the inside surface of a door accessing the main compartment of that case. The side walls of the case flanking both sides of the main compartment are defined by upright zipper opening compartments which store accessories for the laptop computer such as its power supply or disk storage media, as well as conventional stationery like pens, pencils and note pads. While adequate for many purposes, this case tends to be a bit bulky. The main compartment of the case is intended to stand vertical while the laptop computer is operated from its position attached to the inner side of the main compartment door. In restricted conditions this main compartment can be cumbersome, for example, when the user is trying to work on the laptop computer on the tray of a passenger aircraft.

Another carrying case for portable computers is shown in US Patent 5,445,266. Here, however, the keyboard and display portion of the computer to be transported are separate pieces and the carrying case is constructed to support the display portion by providing for releasable attachment means such as hook and loop fasteners to hold the display portion in a fixed position against portions of the carrying case. While less bulky than the previously described carrying case, the disclosed carrying case is a special type. Also, the keyboard is not positioned optimally for use on the lap of the user.

Accordingly, it is an object of the instant invention to provide a simple, light weight carrying case that permits carrying a laptop computer as well as operating the laptop computer while substantially contained within the main compar tment of the carrying case.

It is another object of the invention to provide a hammock-like support for the laptop computer within the confines of the main packing compartment. This hammock includes passages or openings through a central portion thereof, as well as openings in the walls of the main compartment which lead to a secondary compartment adjacent the main packing compartment. The secondary compartment is sized to receive the power supply, power cords and the like for the laptop computer case. I n this way, the laptop computer can be connected to the wiring for powering the laptop computer when the laptop computer is enclosed in the main compartment of the carrying case. The laptop computer can be powered during use by the batteries or other power supply normally contained in the secondary compartment, whereby the laptop computer can be recharged by the power supply.

It is another object of this invention to provide a carrying case with a hammock which engages the laptop computer in its closed or transport position as well as when the computer is in the use position with the keyboard hinged at a substantial angle away from the display portion of the laptop computer. The ends of the hammock are affixed to the two main walls of the main packing compartment so that when the laptop computer is opened at an obtuse angle, the keyboard and the display portion are suspended on the hammock at optimum angles for viewing as well as for operating the keys of the keyboard.

It is another object of the invention to provide a hammock suspension in the main compartment of the carrying case of such material that permits air circulation to the bottom and back of the laptop computer, to thus aid in cooling the laptop computer during use, even while the computer is contained substantially in the main compartment of the laptop computer carrying case. These and other objects of the invention will become apparent with regard to the following disclosure of the preferred embodiment.

### Brief Description of the Invention

Accordingly, the invention provides for a carrying case for a laptop computer, the laptop computer being the usual type that has a portable source of electric power. The keyboard portion and display portion are hinged to one another such that the laptop computer is normally transported with the keyboard portion and display portion in a face -to-face orientation. The inventive carrying case has a main packing compartment for receiving the laptop computer. This main packing compartment has two main walls that are generally planar and rectangular, and a perimeter wall extending around all four sides of and between the two main walls. The perimeter wall includes a portion that hingedly links the two main walls together and also has a sliding fastener for select ively opening the main compartment to provide access to the laptop computer contained therein. A sling or hammock is suspended within the main packing compartment. This hammock has end portions attached to inside surfaces of the main walls of the compartment and a center portion connecting the two end portions and positioned therebetween. The hammock normally engages the outer surfaces of the keyboard portion and display portion of the laptop computer when the laptop computer is in its closed condition while being carried within the main compartment. The center portion of the hammock has passages therethrough. The carrying case includes at least one secondary compartment sized to receive at least the wiring used to power the laptop computer or to rechar ge its portable power supply. This secondary compartment has a wall with an opening sized to permit a portion of that wiring to pass therethrough and the main wall has an opening sized to permit a portion of the wiring to pass therethrough which is near the opening in the wall of the secondary compartment. The hammock has an opening sized to permit a portion of the wiring to pass therethrough which is normally near the opening in the main wall, whereby a laptop computer contained in the main compartment can be electrically connected to wiring in the secondary compartment by wires extending from the secondary compartment through openings in the main wall of the secondary compartment, the hammock and main wall.

### Description of the Figures

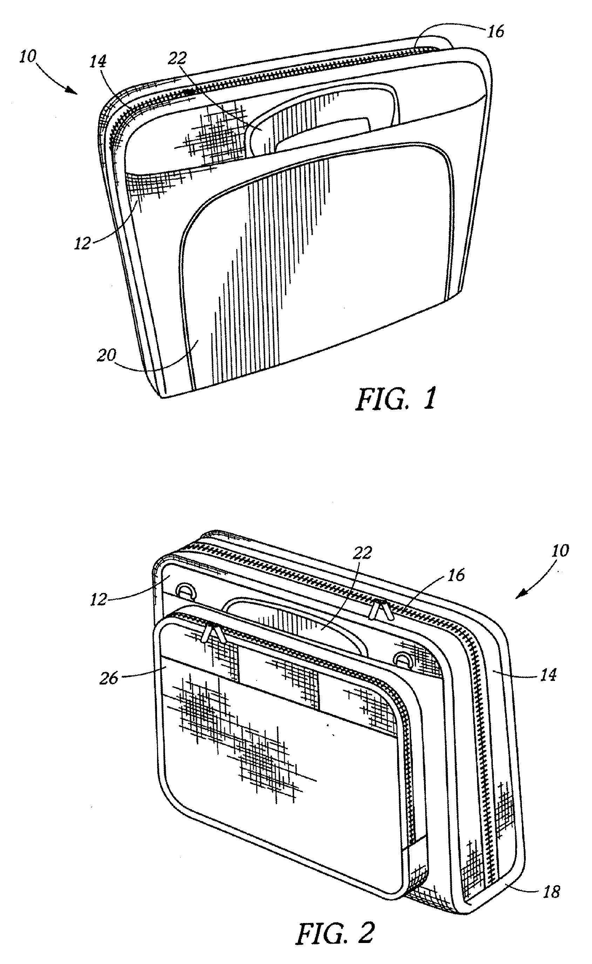

Figure 1 shows a perspective view of the computer carrying case according to this invention.
Figure 2 shows the back of the computer carrying case and the secondary compartment for holding wiring, such as the power supply, of the laptop computer.

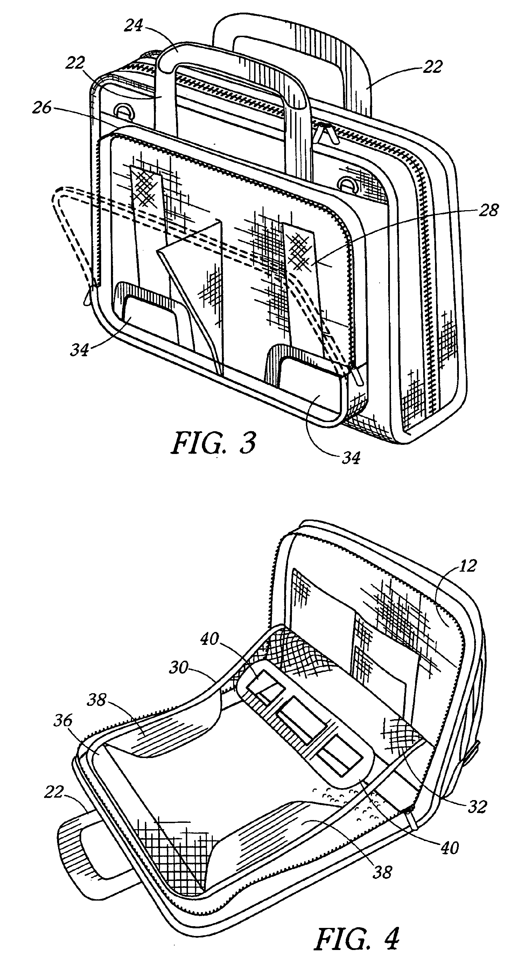

Figure 3 is a view similar to Figure 2 but with the door of the secondary compartment shown in phantom.
Figure 4 shows the carrying case with the main compartment in the opened position ready to receive the laptop computer to be carried.
Figure 5 is a detail of Figure 4 showing a hook and loop fastener portion holding the front edge to the lower half of the main packing compartment.
Figure 6 shows the main packing compartment in the full open position with the sling pulled up and away from the base to reveal details.

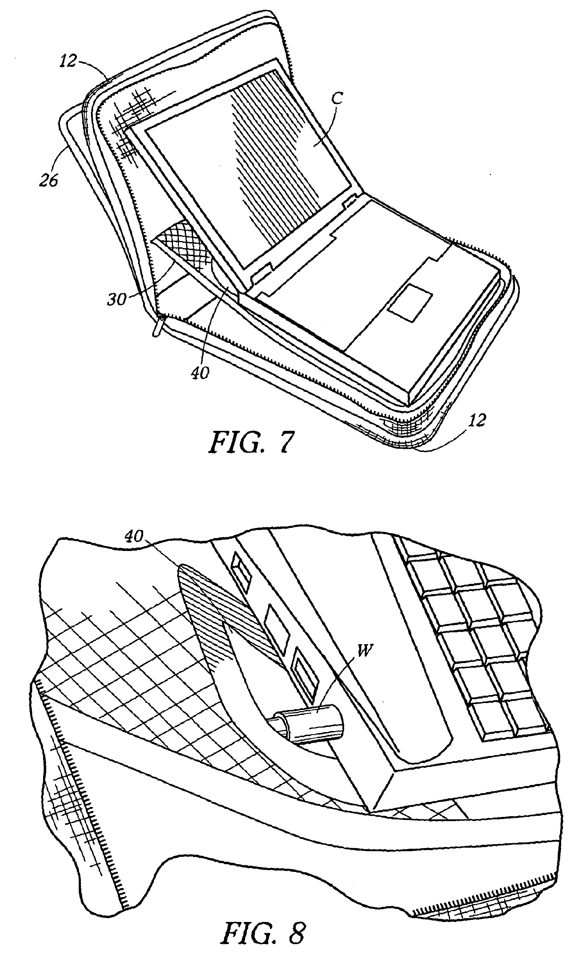

Figure 7 is a view similar to Figure 4 but with a typical laptop computer placed in operative position on the hammock portion.
Figure 8 is a side view of a portion of the carrying case showing the power cord or the like connected to the back of a laptop comput er being fed through openings in the sling.
Figure 9 shows the inside of the secondary compartment of the carrying case with a power supply transformer for a laptop computer positioned within the compartment.
Figure 10 is a diagrammatic view of the case showing details of its operation.

### Detailed Description of the Preferred Embodiment

Referring to the figures, the laptop computer carrying case 10 is a generally rectangular flat carrying case with main walls 12 and a perimeter wall 14 that connects the perimeters of the main walls. Down the center of three of the sides of the perimeter wall is a conventional slide-type fastener 16. The main walls are self- hinged to the remaining side 18 of the perimeter wall; thus the main packing compartment of the case is self -hinging to permit the main walls to hinge away from one another to open up the main compartment. The main compartment walls can hinge beyond 90 ° to one another as will be detailed later. This hinging permits a laptop computer "C" to be opened to assume its "in use" position within the main compartment and thus the user can spontaneously operate the laptop computer without having to remove it completely from the carrying case. This is an important function for those laptop computer users who w ish to rapidly access their computer and use it occasionally while traveling.

The outside surface of a first of the main walls 12, 12 includes a flat panel of a high friction, rubbery material 20, preferably a known type of synthetic or simulated leather. A pair of handles 22 with a patch of similar high friction material slides into and out of slits in the main walls 12. Shoulder strap attachments, not shown, could also be provided.

An auxiliary compartment 26 shares a portion of the main wall 12 on the side of the case 10 opposite to that having the anti- slip panel 20. This compartment is preferably smaller than the main compartment. Inside of compartment 26 are elastic straps 28 attached to the main wall 12. Openings 34, large enough to easily let wi res and their electrical connectors pass through, form passages into the main packing compartment.

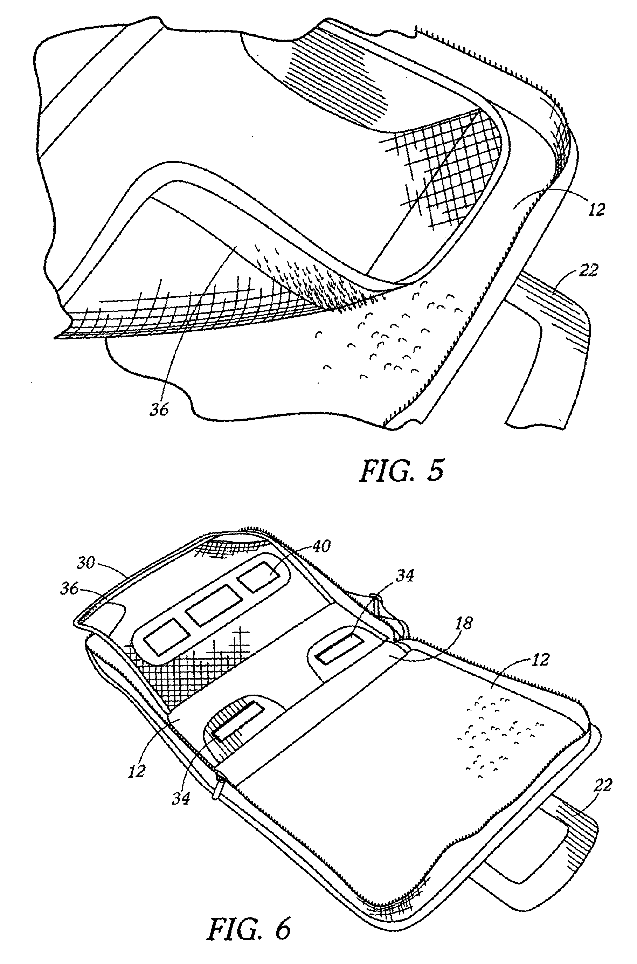

The sling or hammock support 30 is a central feature of the preferred embodiment. As can be seen from the figures, this hammock or sling consists of a gener ally rectangular strip of mesh material. Preferably this mesh comprises an open work, basket weave textile preferably coated with a non- slip vinyl emulsion. Stiffening, high friction panels 38, of the same material as that used on the outside portions of the case, further enhance the stabilizing and computer gripping functions of the hammock 30. The primary function of the hammock 30 is to grip the bottom and back surfaces of a laptop computer to help hold it in position during use, as well as permit cir culation of cooling air around the laptop computer during use. The open mesh helps ambient air dissipate the heat of the operating computer while still permitting the user to maintain the laptop computer in position. The sling or hammock 30 is fixedly attached to the upper portion of the inside of the main wall 12 main packing compartment, preferably about a third of the way up from the self -hinging portion toward the top edge of the case. The other edge of the sling (remote from the fixed edge) is an edge provided with a hook-type fastener strip 36 (Figure 5), which can be used to selectively engage a portion of the interior surface of the other side of the main packing compartment. This interior surface of the main packing compartment is covered or comprises a corresponding loop- type fabric to which this remote edge of the sling can be selectively but fixedly engaged.

At a central portion of the sling is a series of large openings 40 through which power cords, accessory cords (such as for computer mouse, portable printer and the like) can pass from the laptop computer C suspended on the sling, through these openings 40, and to such accessory equipment secured in the auxiliary compartment 26. Alternatively, as will be detailed, connecting wires passing through these openings can also pass directly into the secondary compartment through openings 34, rather than to the outside of the case.

The inner surface of the upper half of the main wall 12 in the main packing compartment can also preferably include various organizational features such as slit pockets for disks, pens, pencils, etc. These pockets are conveniently arrayed above the connection to the upper edge of the sling as shown.

In Figure 6, the sling has been pulled away from the lower main wall 12 in the main packing compartment wall to reveal the openings 34 into the secondary compartment. These openings are normally near to and approximately correspond to the position and size of the passages through the sling such that, whether the case is open or closed, these openings generally align with one another to permit easy passage of power cords, computer mouse connecting cords, and wiring W to auxiliary computer equipment such as printers that extend through the aligned openings and into the auxiliar y compartment.

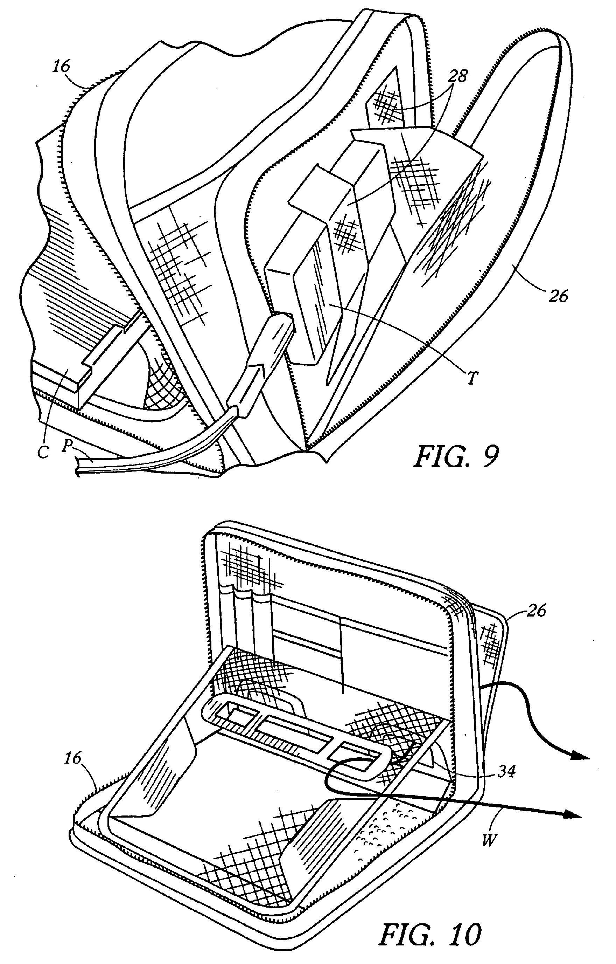

Figures 9 and 10 illustrate this use of the secondary compartment. The secondary compartment 26 consists of a simple gusseted pocket which shares one of the main walls of the main packing compartment and preferably includes one or more elastic straps 28 sewn to this shared wall. The elastic straps can be used to hold a power transformer T (as shown) so that the electrical lead or wiring W (schematically shown in Figure 10) to the computer can extend from the power supply transformer while the power cord P can be fed out of the power supply compartment to a convenient electrical outlet adjacent to the user, if such is available. There is room between the self -hinging portion of the case and the bottom of the hinge for some wires and their co nnectors to protrude.

Note that the laptop computer to be carried is typical of most in that the keyboard portion is hinged to the screen portion. When placed on the sling within the carrying case, the laptop computer tends to be suspended by the hammock such that the hammock hangs above the corresponding walls of the main packing compartment. The screen portion, as is typical of many laptop computers, can be oriented at different angles relative to the keyboard portion, the friction connection between the screen portion and the keyboard portion being adequate to hold this relative position or angle. This adjustment also serves to adjust the angle at which the keyboard is held up by the sling portion during use. In this manner the user can adjust the screen and the angle of the keyboard, and perhaps place the keyboard in a better, more comfortable position. This is especially desirable if the laptop computer is used while the carrying case is positioned on the upper surfaces of the thighs of the user when the user is in a seated position. Usually the upper legs form a downward angle relative to horizontal. This in turn places the keyboard in a corresponding sloping position away from the user. However, when the laptop computer is used while in the invented carrying case, this angle can be adjusted and compensated for in order to place the keyboard in more of a level position. For some this could be a more comfortable orientation. In order to further accommodate using the laptop computer on the upper thigh surfaces of the user, the high friction panel 20 helps makes the carrying case less likely to slide off the lap of the user during keyboarding.

There are several other benefits of the inventive carrying case as described. First, the openings in the sling permit power cords and the like to remain attached at least for short periods of time between uses, such as when the laptop user has to move or change positions in the waiting room of an airport or the like. The convenience of not having to detach the cords and remove the laptop computer from the carrying case can add precious minutes to the time available for keyboarding and the like. Secondly, the sling arrangement permits improved positioning of the keyboard portion of the laptop computer by the hammock 30 supporting the back hinged edge of the laptop computer as detailed above. Also, the sling aids heat dissipation by letting the air circulate to and around the laptop computer while in position on the sling. Since the case includes the power supply compartment with its opening directly into the main compartment, some of the disadvantages of recharging batteries of a laptop computer are reduced.

## Claims

1. A carrying case (10) for a laptop computer, the laptop computer being the type that has connectors to which wiring may be connected during use, such as to a portable source of electric power or other auxiliary equipment, and having a keyboard portion and display portion hinged to one another such that the laptop computer is normally transported with the keyboard portion and display portion in a face- to-face orientation,
the carrying case (10) having a main packing compartment for receiving the laptop computer, the main packing compartment having walls including two main walls (12) and a perimeter wall (14) extending around all four sides of and between the two main walls, the perimeter wall (14) including a portion (18) that hingedly links the two main walls (12) together, and also having a sliding fastener (16) for selectively opening the main compartment to provide access to the laptop computer to be transported therein,
a hammock (30) suspended within the main packing compartment having end portions attached to inside surfaces of the main walls (12) of the main compartment and a center portion connecting the two end portions and positioned therebetween, the hammock (30) normally engaging the keyboard portion and display portion of the laptop computer when the laptop computer is in its closed condition while being carried within the main compartment,
the carrying case further including at least one secondary compartment (26) sized to receive at least some of the wiring, the secondary compartment (26) having a wall with an opening sized to permit a portion of that wiring to pass therethrough and one of the walls (12) of the main compartment having an opening sized to permit a portion of the wiring to pass therethrough which is near the opening in the wall of the secondary compartment (26).

2. The carrying case of Claim 1 wherein the hammock has an opening sized to permit a portion of the wiring to pass therethrough which is normally near the opening in the wall of the main compartment, whereby a laptop computer contained in the main compartment can be electrically connected to wiring in the secondary compartment by wires extending from the secondary compartment, through openings in the wall of the secondary compartment, the wall of the main compartment, and the hammock.

3. The carrying case of Claim 1 wherein the hammock consists mostly of an open, mesh textile, whereby heat generated by a laptop computer suspended on the hammock can be more easily dissipated to the ambient air.

4. The carrying case of Claim 1 wherein the auxiliary compartment is attached to a first of the main walls of the case, and wherein another of the main walls includes an outer surface of a high friction material, whereby the case can be more easily balanced on the lap of a user.

5. The carrying case of Claim 1 wherein one end portion of the hammock is fixed to an inside surface of a first of the main walls, and the other end portion of the hammock is releasably att ached to an inside surface of a second of the main walls.

6. The carrying case of Claim 5 wherein the opening for wiring into the auxiliary compartment passes through the first main wall.

7. The carrying case of Claim 5 wherein the auxiliary compartment is attached to a first of the main walls of the case, and wherein a second of the main walls includes an outer surface of a high friction material.

## Patentansprüche

1. Tragetasche (10) für einen Laptop-Computer, wobei der Laptop-Computer von einem Typ ist, der über Anschlüsse verfügt, an die während des Gebrauchs eine Verkabelung angeschlossen werden kann, wie etwa zu einer tragbaren Stromquelle oder einem anderen Hilfsgerät, und der einen Tastaturabschnitt und einen Bildschirmabschnitt hat, die miteinander gelenkig verbunden sind, so dass der Laptop-Computer normalerweise bei einer einander zugewandten Ausrichtung von Tastaturabschnitt und Bildschirmabschnitt transportiert wird,
wobei die Tragetasche (10) ein Hauptpackabteil für die Aufnahme des Laptop-Computers hat, das Hauptpackabteil Wände hat, die zwei Hauptwände (12) und eine Umfangswand (14) enthalten, die sich um alle vier Seiten der beiden Hauptwände und zwischen diesen erstreckt, und die Umfangswand (14) einen Abschnitt (18) enthält, der die beiden Hauptwände (12) miteinander gelenkig verbindet und zudem einen Reißverschluss (16) hat, um das Hauptabteil wahlweise zu öffnen, um einen Zugriff auf den Laptop-Computer, der darin transportiert wird, zu gewähren,
wobei eine Hängematte (30), die in dem Hauptpackabteil aufgehängt ist, zwei Endabschnitte, die an den Innenflächen der Hauptwände (12) des Hauptabteils befestigt sind, und einen zentralen Abschnitt aufweist, der die beiden Endabschnitte verbindet und zwischen diesen angeordnet ist, und die Hängematte (30) normalerweise mit dem Tastaturabschnitt und dem Anzeigeabschnitt des Laptop-Computers in Eingriff steht, wenn sich der Laptop-Computer in seinem geschlossenen Zustand befindet, während er im Hauptabteil umhergetragen wird,
wobei die Tragetasche weiterhin wenigstens ein sekundäres Abteil (26) enthält, dass so bemessen ist, das es wenigstens einen Teil der Verkabelung aufnimmt, das sekundäre Abteil (26) eine Wand mit einer Öffnung hat, die so bemessen ist, dass ein Abschnitt der Verkabelung diese durchlaufen kann, und eine der Wände (12) des Hauptabteils eine Öffnung, die so bemessen ist, das diese ein Abschnitt des Kabels durchlaufen kann, in der Nähe der Öffnung des sekundären Abteils (26) aufweist.

2. Tragetasche nach Anspruch 1, bei der die Hängematte eine Öffnung hat, die so bemessen ist, dass ein Abschnitt der Verkabelung diese durchlaufen kann, die sich normalerweise in der Nähe der Öffnung in der Wand des Hauptabteils befindet, wodurch ein Laptop-Computer, der im Hauptabteil enthalten ist, mit der Verkabelung im sekundären Abteil durch Leitungen elektrisch verbunden werden kann, die sich von dem sekundären Abteil, durch die Öffnungen in der Wand des sekundären Abteils, der Wand des Hauptabteils und der Hängematte erstrecken.

3. Tragetasche nach Anspruch 1, bei der die Hängematte hauptsächlich aus einem offenen Netztextil besteht, wodurch Wärme, die von einem Laptop-Computer erzeugt wird, der auf der Hängematte hängt, leichter an die Umgebungsluft abgegeben werden kann.

4. Tragetasche nach Anspruch 1, bei der ein Zusatzabteil an der ersten der Hauptwände der Tasche angebracht ist und bei der eine weitere der Hauptwände eine Außenoberfläche eines Materials hoher Reibung enthält, wodurch die Tasche einfacher auf dem Schoß eines Benutzers im Gleichgewicht gehalten werden kann.

5. Tragetasche nach Anspruch 1, bei der ein Endabschnitt der Hängematte an einer Innenfläche einer ersten der Hauptwände befestigt ist und der andere Endabschnitt der Hängematte lösbar an einer Innenfläche einer zweiten der Hauptwände angebracht ist.

6. Tragetasche nach Anspruch 5, bei der die Öffnung für die Verkabelung in das Zusatzabteil durch die erste Hauptwand verläuft.

7. Tragetasche nach Anspruch 5, bei der das Hilfsabteil an einer ersten der Hauptwände der Tasche angebracht ist und bei der eine zweite der Hauptwände eine Außenfläche eines Materials hoher Reibung enthält.

## Revendications

1. Mallette de transport (10) pour un ordinateur portable, l'ordinateur portable étant du type comportant des connecteurs auxquels le câblage peut être relié pendant l'utilisation, comme à une source portable d'énergie électrique ou un autre équipement auxiliaire, et ayant une partie de clavier et une partie d'affichage articulées l'une à l'autre de telle sorte que l'ordinateur portable soit transporté normalement avec la partie de clavier et la partie d'affichage dans une orientation face à face,
la mallette de transport (10) comportant un compartiment d'emballage principal pour recevoir l'ordinateur portable, le compartiment d'emballage principal comportant des parois comprenant deux parois principales (12) et une paroi périphérique (14) s'étendant autour des quatre côtés des deux parois principales et entre celles-ci, la paroi périphérique (14) comprenant une partie (18) reliant de manière articulée les deux parois principales (12) ensemble, et comportant également une fixation coulissante (16) pour ouvrir sélectivement le compartiment principal pour permettre d'accéder à l'ordinateur portable qui peut être transporté dans celle-ci,
un hamac (30) suspendu à l'intérieur du compartiment d'emballage principal, comportant des parties d'extrémité fixées sur les surfaces intérieures de la paroi principale (12) du compartiment principal et une partie centrale reliant les deux parties d'extrémité et positionnée entre celles-ci, le hamac (30) accouplant normalement la partie de clavier et la partie d'affichage de l'ordinateur portable quand l'ordinateur portable est dans son état fermé pendant qu'il est transporté à l'intérieur du compartiment principal,
la mallette de transport comprenant également au moins un compartiment secondaire (26) dimensionné pour recevoir au moins une partie du câblage, le compartiment secondaire (26) comportant une paroi avec une ouverture dimensionnée pour permettre à une partie de ce câblage de traverser celui-ci, et l'une des parois (12) du compartiment principal comportant une ouverture dimensionnée pour permettre à une partie du câblage de traverser celui-ci proche de l'ouverture dans la paroi du compartiment secondaire (26).

2. Mallette de transport selon la revendication 1, dans laquelle le hamac comporte une ouverture dimensionnée pour permettre à une partie du câblage de traverser celui-ci normalement proche de l'ouverture dans la paroi du compartiment principal, moyennant quoi un ordinateur portable contenu dans le compartiment principal peut être relié électriquement au câblage dans le compartiment secondaire par des fils s'étendant depuis le compartiment secondaire, à travers des ouvertures dans la paroi du compartiment secondaire, la paroi du compartiment principal, et le hamac.

3. Mallette de transport selon la revendication 1, dans laquelle le hamac est composé majoritairement d'un textile en maille ouverte, moyennant quoi la chaleur générée par un ordinateur portable suspendu sur le hamac peut être plus facilement dissipée dans l'air ambiant.

4. Mallette de transport selon la revendication 1, dans laquelle le compartiment auxiliaire est fixé à une première des parois principales de la mallette, et dans laquelle une autre des parois principales comprend une surface extérieure d'un matériau à frottement élevé, moyennant quoi la mallette peut être plus facilement équilibrée sur les genoux d'un utilisateur.

5. Mallette de transport selon la revendication 1, dans laquelle une partie d'extrémité du hamac est fixée à une surface intérieure d'une première des parois principales, et l'autre partie d'extrémité du hamac est fixée de manière amovible à une surface intérieure d'une seconde des parois principales.

6. Mallette de transport selon la revendication 5, dans laquelle l'ouverture pour le câblage dans le compartiment auxiliaire traverse la première paroi principale.

7. Mallette de transport selon la revendication 5, dans laquelle le compartiment auxiliaire est fixé à une première paroi principale de la mallette, et dans laquelle une seconde paroi principale comprend une surface extérieure composée d'un matériau à frottement élevé.
